Europäisches Patentamt

European Patent Office

Office européen des brevets

(19)

(11) EP 0 457 487 B1

(12) **EUROPEAN PATENT SPECIFICATION**

(45) Date of publication and mention
of the grant of the patent:
**31.01.1996 Bulletin 1996/05**

(51) Int Cl.⁶: **H04R 1/30**, H04R 1/40,
B60R 11/02

(21) Application number: **91304147.1**

(22) Date of filing: **08.05.1991**

(54) **Horn speaker**

Hornlautsprecher

Haut-parleur à pavillon

(84) Designated Contracting States:
**DE FR GB**

(30) Priority: **18.05.1990 JP 129613/90**
**06.11.1990 JP 302031/90**

(43) Date of publication of application:
**21.11.1991 Bulletin 1991/47**

(73) Proprietor:
**MATSUSHITA ELECTRIC INDUSTRIAL CO.,
LTD.
Kadoma-shi, Osaka-fu 571 (JP)**

(72) Inventors:
• **Saiki, Shuji
Uda-gun, Nara-ken, 633-02 (JP)**

• **Honda, Kazuki
Katano-shi, Osaka-fu, 576 (JP)**
• **Date, Toshihiko
Yamatokouriyama-shi, Nara-ken, 639-11 (JP)**

(74) Representative: **Crawford, Andrew Birkby et al
London WC1V 7LE (GB)**

(56) References cited:
GB-A- 2 047 179          US-A- 2 214 591
US-A- 4 091 891          US-A- 4 143 738
US-A- 4 703 502

• **PATENT ABSTRACTS OF JAPAN vol. 5, no. 113
(E-66)22 July 1981**
• **PATENT ABSTRACTS OF JAPAN vol. 13, no. 25
(M-787)20 January 1989**

## Description

BACKGROUND OF THE INVENTION

### 1. Field of the Invention

The present invention relates to a horn speaker and a vehicle-mounted speaker apparatus using the same.

### 2. Description of Prior Art Examples

Heretofore, horn speakers have been used as one means for performing a highly efficient sound reproducing and controlling directional characteristic.

In the prior art speaker, a highly efficient sound reproducing can be performed by horn effect, but a wave front of the sound pressure level at horn mouths thereof has been determined by the horn side wall shape thereof, and the directional characteristic thereof also determined unconditionally by the wave front. That is, the wave front of the sound pressure level propagated to in the horn has become spherical sound waves along the horn side wall, which have not so closely related to the horn mouth shape.

Accordingly, in order to change the directional characteristic of the horn speaker, it has been necessary to change the horn side wall shape according to the directional characteristic to be targeted. For any shape of horn side wall, horn mouth and the like, however, the wave front of the sound pressure level propagated in the horn, though has changed for the curvature thereof, has unavoidably become spherical sound wave form, and the sound waves radiated from the horn mouth to a sound field space have also become spherical sound wave, whereby it has been difficult to obtain a very sharp directional characteristic by the horn.

In the general art of horn speakers US-A-2214591 discloses a horn loud speaker the driving circuit of which contains two parts, particularly responsive respectively to low and high frequencies. In one of the illustrated embodiments the speaker is provided with two output horn units.

Japanese Application 56052994, which document is considered to be closest prior art and thus forming the base for the preamble of claim 1, discloses a stereophonic loud speaker apparatus using horn speakers, in particular using a number of horn units supplied with sound by pipes of varying lengths. The pipes are fixed to a plate which is caused to have an oscillating motion such that the sound generated by the loud speaker is propagated to give a stereophonic effects.

US-A-4091891 discloses a horn speaker which comprises a diaphragm positioned close to the throat and side walls thereby forming sound passages for radiating vibrations of the diaphragm sound waves from the mouth of the speaker. The advantages given for this arrangement include simplicity of manufacture and flat frequency characteristics.

An object of the present invention is to provide a horn speaker which can easily realized an arbitrary directional characteristic by horn units with the same shape.

In order to attain the above-mentioned object, the present invention provides a horn speaker comprising:

a horn driver for generating sound waves;
a plurality of pipes each having first and second ends, the first ends of said plurality of pipes being coupled to said horn driver whereby to transmit therethrough sound waves generated by said horn driver; and
a plurality of horn units each having a mouth for radiating sound waves therefrom, the plurality of horn units being respectively coupled to the second ends of the plurality of pipes whereby to radiate from said mouths sound waves transmitted through said plurality of pipes,
characterized in that
each of said plurality of pipes is a flexible pipe, whereby said plurality of pipes are enabled to be flexed so as to arrange said plurality of horn units such that their mouths are arranged on a specific plane to constitute a single sound source having a desired directivity.

In this arrangement an arbitrary directional characteristic can be obtained by changing the arrangement form of said respective horn units, or by changing stepwise the lengths of said pipes.

The horn speaker of the present invention comprises an aggregate of a plurality of horn units which are connected through respective pipes to the horn driver, and arranged in a desired manner to obtain a desired directional characteristic.

Thus, each horn unit can be considered to be an independent sound source, and the horn be handled as an aggregate of the sound sources. Accordingly, the directional characteristic can be considered as if it is derived from an aggregate of line sources.

Therefore, by changing the arrangement form of horn units, by making equal the pipe lengths to each other, or by changing stepwise the pipe lengths, a horn speaker capable capable of obtaining an arbitrary directional characteristic can be realized while used just the same horn driver and horn units.

BRIEF DESCRIPTION OF THE DRAWINGS

Fig. 1 is a side view of a horn speaker of a first embodiment according to the present invention;
Fig. 2 is a sound pressure level directional characteristic graph in the first embodiment according to the present invention;
Fig. 3 is a side view of a horn speaker of a second embodiment according to the present invention;
Fig. 4 is a side view of a horn speaker of a third embodiment according to the present invention;

Fig. 5 is a top view of a horn speaker of a fourth embodiment according to the present invention;

Fig. 6 is a structural cross-sectional view of a horn driver according to the present invention;

Fig. 7 is a shematic structural view of a vehicle-mounted speaker apparatus of the first embodiment in which a horn speaker of the present invention is applied to vehicle-mounted use;

Fig. 8 is a side view of a horn speaker for high-frequency range in the second embodiment in which a horn speaker of the present invention is applied to vehicle-mounted use; and

Fig. 9 is a schematic structural view of a vehicle-mounted speaker apparatus in the third embodiment in which a horn speaker of the present invention is applied to vehicle-mounted use.

DESCRIPTION OF PREFERRED EMBODIMENTS

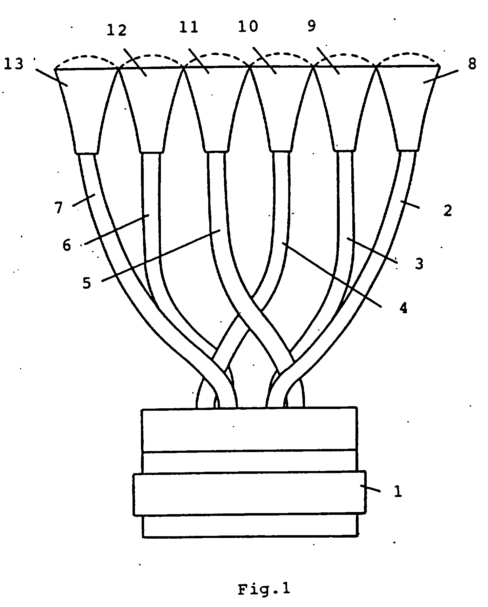

Fig. 1 shows a horn speaker in the first embodiment according to the present invention, where numerals 2 though 7 indicate pipes which are connected to a horn driver 1 and have a length equal to each other, the heads thereof are combined with horn units 8 through 13, and respective front mouths thereof are linearly arranged.

The operation of the horn speaker with the above mentioned arrangement will be explained. Sound waves put out from the horn driver 1 are equally divided into and transmitted through the pipes 2 through 7. In the pipes 2 through 7 whose inside diameter has been selected in a manner to be sufficiently smaller than the wavelength of a frequency to be reproduced, plane sound waves having little loss during transmission are transmitted and introduced to the horn units 8 through 13, and through the mouths thereof, sound waves are radiated to a sound field space.

Fig. 1 shows with a broken line the sound pressure level wave front of the horn units 8 through 13 at the mouths, where the sound waves become spherical sound waves at the mouth of respective horn units. Thus, the horns operate as an aggregate of the horn units 8 through 13 having said wave front.

According to the horns in the first embodiment of the present invention, the horns can be considered to be an aggregate of the horn units 8 through 13 having a small spherical sound wave at the mouth, that is, the respective horn units 8 through 13 can be considered to be equivalently one line source. In this embodiment, the horn units 8 through 13 are linearly arranged, whereby the horn has a directional characteristic for the case where line sources are linearly arranged, and the wave front thereof is close to that of plane sound waves. Accordingly, the horns can be realized whose directional characteristic is very sharp compared with that of prior art ones.

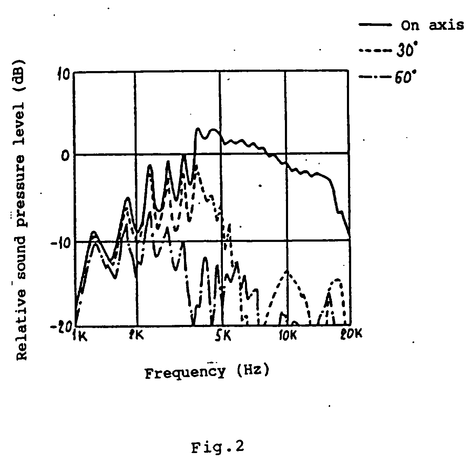

The directional characteristic of the horns in this embodiment is shown in Fig. 2. It will be understood that the horns of the present invention can realize a very sharp directional characteristic that linear sound sources have.

Assuming that the horn units 8 through 13 are expotential horns with a cutoff frequency $f_c$, it is preferable that an equivalent radius $a_M$ of the composite mouth sectional area of the horn units 8 through 13 is equal to or more the following value:

$$a_M \fallingdotseq \frac{0.5\,c}{2\,\pi\,f_c}$$

(where c is velocity of sound)

In such horns, the plane sound waves, which are acoustically matched with the sound field space in the band with the cutoff frequency $f_c$ or more and transmitted through the pipes, are radiated to the sound field space substantially without being reflected.

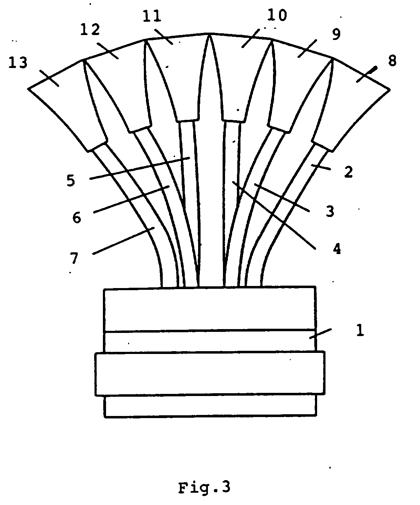

Fig. 3 shows a horn speaker in the second embodiment according to the present invention. The embodiment in Fig. 3 is just the same in composition as the first embodiment of the present invention, but are different therefrom in that the arrangement of the mouths of the horn units 8 through 13 becomes curved.

In this embodiment, the sound waves introduced to the mouths of the horn units 8 through 13 are the same in transmission action as those of the first embodiment, and radiated through the curvedly arranged horn units 8 through 13 to the sound field space as a sound. Accordingly, the wave front thereof becomes that of the curvedly arranged point sources, that is, equivalently spherical sound waves, thereby allowing the directional characteristic thereof to become wide, though the components thereof are the same as those of the first embodiment.

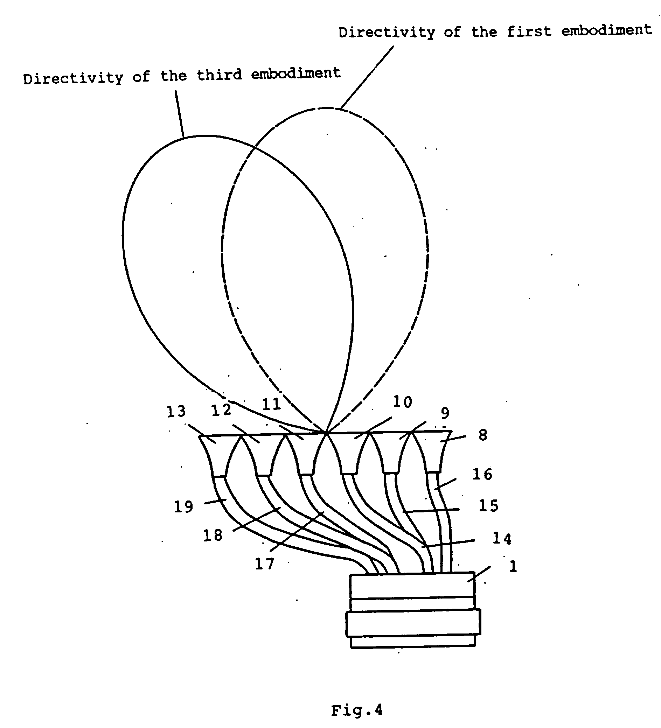

Fig. 4 shows a horn speaker in the third embodiment according to the present invention. Also, in Fig. 4, the horn driver 1 and the horn units 8 through 13, which are components thereof, are the horn units 8 through 13, which are components thereof, are the same as those of the first and the second embodiments, and the mouths of the horn units 8 through 13 are linearly arranged. In this embodiment, respective lengths of pipes 14 through 19 become longer stepwise in manner to be the pipe 14 < the pipe 15 < ... ... < the pipe 18 < the pipe 19.

In the above-mentioned composition, the sounds put out from the horn driver 1 have phase delays different from each other up to the horn mouth because the lengths of the pipes 14 through 19 are different from each other. Accordingly, the sounds from the equivalently and linearly arranged point sources, which are radiated from the horn units 8 through 13, have thus phase delays stepwise from the horn unit 8 toward the horn unit 13. That is, the straight line sources having such phase difference, as shown with a solid line in contrast to a beam having the directional characteristic of the first embodiment shown with a broken line in Fig. 4, allows a beam to be inclined toward the horn unit 13 having less phase delay, whereby an arbitrary directional characteristic can be realized according to the length.

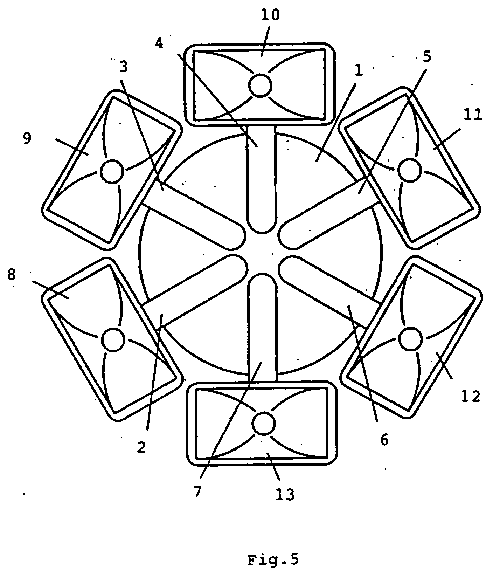

Fig. 5 shows a top view of a horn speaker in the fourth embodiment according to the present invention, where numerals 2 through 7 indicate pipes connected to the horn driver 1 and numerals 8 through 13 indicate horn units combined with the heads of the pipes 2 through 7, and the mouths of the horn units are arranged in a circular ring form.

What is largely different from the horn speaker of the first embodiment according to the present invention shown in Fig. 1 is the arrangement of the horn. The directional characteristic in the horizontal direction of the horn speaker of the first embodiment in which horns are linearly arranged has been very sharp as shown in Fig. 2. However, since the length of sound sources in the vertical direction is short, the directional characteristic thereof becomes wide. In the horn speaker of the fourth embodiment according to the present invention in which the horns 8 through 13 are arranged in a circular ring form as shown in Fig. 5, when the length of straight line sources is equal to the circular diameter of circular ring sources, the sharpness of the directional characteristic of he both sources is substantially equal to each other as is generally known. That is, by making the horn arrangement circularly ringed, the sharp directional characteristic in the horizontal direction which straight line sources have can be realized in all directions by use of the circular ring sources.

An embodiment of a horn driver associated with the present invention will be explained hereinafter.

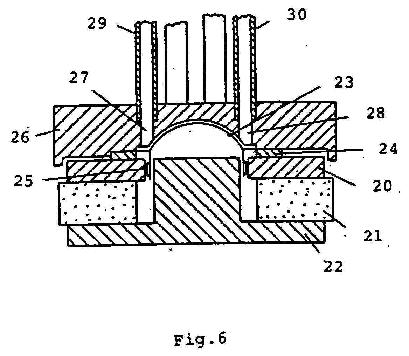

Fig. 6 is a structural cross-sectional view of a horn driver according to the present invention, where the composition of the horn driver connected with pipes is specifically shown.

In Fig. 6, a lower plate 22 having a center pole at the center thereof is fixedly secured to the lower surface of a circular ring magnet 21 fixedly secured to the lower surface of an upper plate 20. The periphery of a dome diaphragm 23 is fixedly secured to a diaphragm ring 24. A voice coil 25 is fixedly secured to the dome rising part of the diaphragm 23, and held in the magnetic gap between the inside diameter of the upper plate 20 and the center pole of the lower plate 22. A horn equalizer 26 is arranged providing a narrow gap between the equalizer and the diaphragm 23, and provided with plurality of circular holes 27 and 28, which are connected respectively with pipes 29 and 30 which are in turn combined with respective horn units at the heads thereof, as mentioned above.

In the horn driver of the present invention with the above-mentioned arrangement, the sound waves from the dome diaphragm 23 is phase equalizes by the horn equalizer 26, and introduced by the holes 27 and 28 provided in the horn equalizer 26 directly to the pipes 29 and 30 and then into the horn units, where the waves are radiated to the sound field space, whereby the sound waves from the equalizer are not disturbed at the horn throat part as in prior art, allowing a flat sound pressure level characteristic to be obtained.

In the above-mentioned embodiments, the pipes connecting the horn units to the horn driver are of flexible material. This allows the same horn speaker to change its directional characteristic as required.

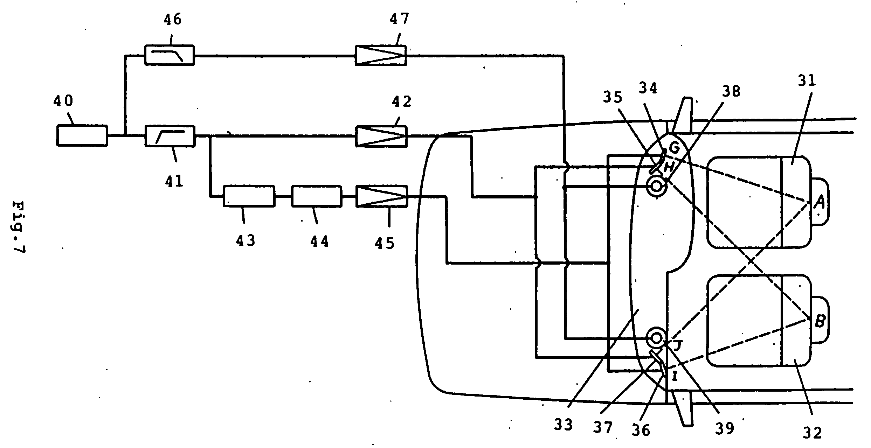

Fig. 7 shows the first embodiment in which a horn speaker of the present invention is applied to vehicle-mounted use, where numeral 31 indicates a driver's seat, numeral 32 an assistant driver's seat and numeral 33 a dashboard. A set of horn speakers 34 for high-frequency range is installed in such a manner that the horn mouths thereof are directed toward to the driver's seat and arranged linearly at the right corner of the dashboard 33. Another set of horn speakers 35 for high-frequency range is installed in a similar manner that the horn mouths thereof are directed toward the assistant driver's seat and arranged linearly at the right corner of the dashboard 33. A set of horn speakers 36 for high-frequency range is installed in such a manner that the horn mouths thereof are directed toward the assistant driver's seat and arranged linearly at the left corner of the dashboard 33. Another set of horn speakers 37 for high-sound range is installed in a similar manner that the horn mouths thereof are directed toward the driver's seat and arranged linearly at the left corner of the dashboard 33. A speaker 38 for intermediate/low-frequency range is installed at the lower right corner of the dashboard 33 in a manner to be directed toward the floor and a speaker 39 for intermediate/low-frequency range is installed at the lower left corner of the dashboard 33 in a similar manner to be directed toward the floor. An electrical signal source is indicated by numeral 40. A high-pass filter 41 supplies amplifier 42, which drives the horn speakers 35 and 37 for high-frequency range, and delayer 43. The output of delayer 43 is input to attenuator 44, which feeds amplifier 45 which drives the horn speakers 34 and 36 for high-sound range. A low-pass filter 46 supplies amplifier 47 which drives the speakers 34 and 36 for intermediate/low-frequency range.

In Fig. 7, all the speakers 34, 35, 36 and 37 installed at both the right and left corners of the dashboard 33 are horn speakers having a sharp directional characteristic described in Fig. 1.

The horn speakers 34 and 36 are installed in such a manner that the radiated sound therefrom is limited and reached to sound-hearing points A and B, respectively, and the horn speakers 35 and 37 are installed in such a manner that the radiated sound therefrom is limited and reached to sound-hearing points B and A, respectively.

The delayer 43 corrects the response time gaps due to the sound path differences between the routes G-A and J-A from the right and left channels at the sound-hearing point A of the driver's seat 31, and between the routes I-B and H-B from the right and left channels at the sound-hearing point B of the assistant driver's seat 32, while the attenuator 44 corrects the sound pressure level difference due to the distance attenuation.

Accordingly, a high-frequency range signal from the electrical signal source 40 is range divided by the high-pass filter 41, divided into a signal passing through the delayer 43 and the attenuator 44, and a signal not passing through them, and supplied to the amplifiers 42 and 45, respectively, whereby the sound from the right channel radiated from the horn speaker 34 and the sound from the left channel radiated from the horn speaker 37 at the sound hearing point A of the driver's seat become a reproduced sound without the time response gap and the sound pressure level difference. The sounds at the sound hearing point B of the assistant driver's seat also become the same reproduced sound as the above, and the horn speakers have a sharp directional characteristic, thereby reducing to the minimum the disturbance of the reproduced sound of the speakers of one channel by the reproduced sound of the other channel.

The speakers 38 and 39 for intermediate/low-frequency range sound are provided under the dashboard 33, thereby allowing the radiated sound thereof to be reflected and diffused on the floor. In such a sound field as in a vehicle compartment where the sound source positions are close to the sound-hearing points by the fact the low-frequency range is of non-directional, and by the effect of reflection and diffusion-of the intermediate-frequency range on the floor, a sound image can be fixed to near the center of the vehicle compartment without being dislocated toward the sound-hearing points. For the sound of intermediate/high-frequency range, this also allows the dislocation of the sound image fixed position toward the sound-hearing points to be reduced, and thus the widespread feeling and stereophonic feeling of reproduced sounds are accomplished combining with the speakers for high-frequency range having the above-mentioned sharp directional characteristic.

In the embodiment shown in Fig. 7, the lengths of the sound pipes connecting the horn driver of the horn speaker for high-frequency range to the horns thereof have been rendered the same for all units,and the electrical delayer and attenuator been used as the means for equalizing the responses of both the right and left channels at the sound-hearing points. However, if the pipe lengths of the speaker for high-frequency range for the right channel at the driver's seat, that is, the speaker 34 shown in Fig. 7, and those of the speaker 36 for the left channel at the assistant driver's seat are made longer by the length to correct the time delay due to the distance difference than the pipe lengths of the speaker 37 for the left channel at the driver's seat and those of the speaker 35 for the right channel at the assistant driver's seat, respectively, the same effect as with the electrical delayer can be acoustically realized. Also, if the pipe lengths are made longer in this manner, the distance attenuation due to the transmission of sound waves in the pipe, that is, the same effect as with the electrical attenuator can be acoustically and simultaneously realized, whereby the electrical delayer and attenuator become unnecessary and the electrical circuit for driving the speaker apparatus can be significantly simplified.

With reference to drawings, the second embodiment in which a horn speaker of the present invention is applied to vehicle-mounted use will be explained hereinafter.

ter.

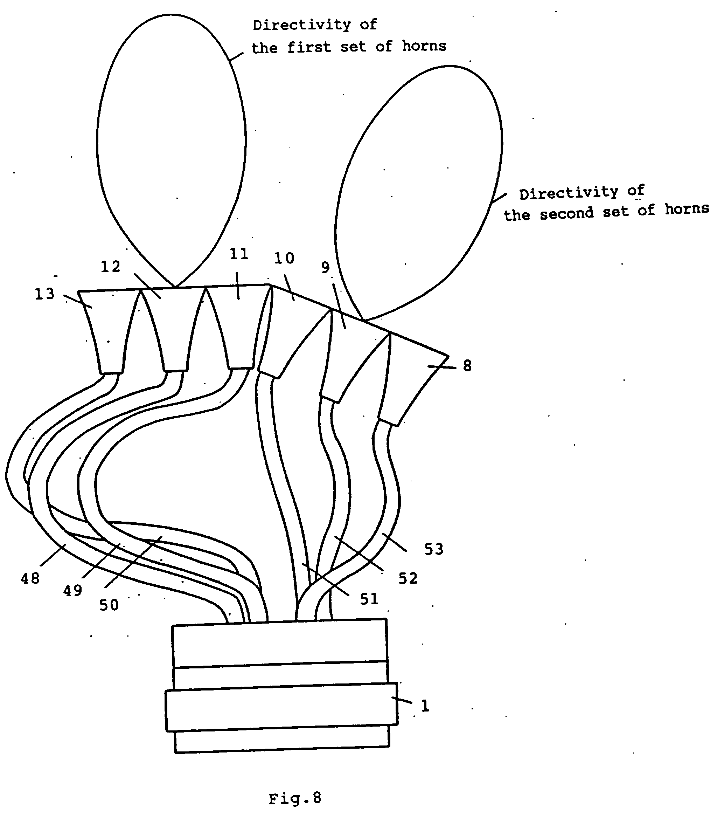

Fig. 8 shows a composition of a speaker for high-frequency range of a vehicle-mounted speaker apparatus in the second embodiment according to the present invention. In Fig. 8, numeral 1 indicates a horn driver, and numerals 48 through 50 do pipes which have the same length and whose heads are combined with the first set of horn units 11 through 13 linearly arranged. Numerals 51 through 53 indicate pipes which have a length shorter than the pipes 48 through 50 and whose heads are combined with the second set of horn units 8 through 10 arranged linearly and inclined to said horn units 11 through 13. The above-mentioned speakers for high-sound range, though not shown here, are to be installed at both the right/left corners, respectively, as with the first embodiment.

The operation of the speaker apparatus thus composed will be explained hereinafter. Fig. 8 shows the directional pattern of the first set of horns composed of the horn units 11 through 13 and that of the second set of horns composed of the horn units 8 through 10. For example, the first set of horns are arranged in such a manner that the horns radiate sounds toward the driver's seat, while the second set of horns are arranged in such a manner that the horns are made inclined to the first set of horns and radiate sounds toward the assistant driver's seat. Also, if the length of the pipes 48 through 50 of the first set of horns is set in such a manner that the response from the channel thereof is made equal to that from the opposite channel installed with the same composition by an acoustic delay and attenuation effect, the two sets of single horn speakers which are to be required in the embodiment shown in Fig. 7 and composed of the two horn driver for each one side channel can be replaced with two sets of horn speakers composed of the single horn driver 1 used commonly, whereby the composition thereof including the electrical circuit is made simplified.

With reference to drawings, the third embodiment in which a horn speaker of the present invention is applied to vehicle-mounted use will be explained hereinafter.

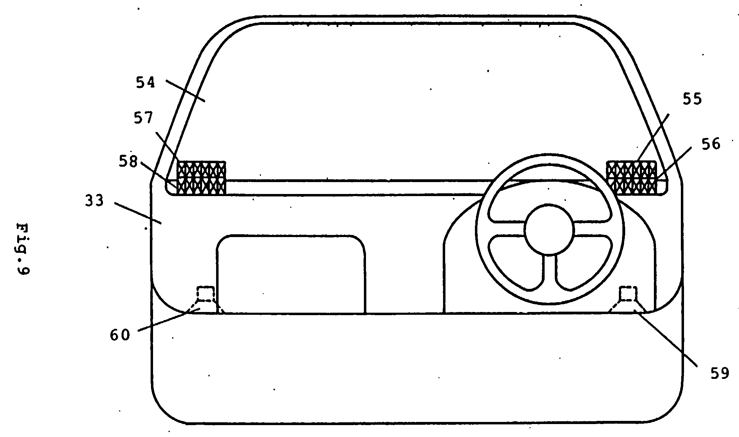

Fig. 9 shows a composition of a vehicle-mounted speaker apparatus in the third embodiment according to the present invention. In Fig. 9, numeral 33 indicates a dashboard, numeral 54 does a windshield, numerals 55 and 56 do two sets of horn speakers for high-frequency range which are installed in two-stage stack form at the right corner of the dashboard 33 and whose mouths are directed toward the front, numerals 57 and 58 do two sets of horn speakers for high-frequency range installed at the left corner as with the above, and numerals 59 and 60 do speakers for intermediate/low-frequency range which are installed at both the lower right and left corners of the dashboard 33 and directed toward the floor.

In Fig. 9, for the horn speakers 55, 56, 57 and 58 for high-frequency range installed in two-stage stack from at both the corners, of the two sets of speakers of the one side channel, at least one set of speakers employ the horn speakers using the pipes, each with a different length, as shown in Fig. 4. In this embodiment, the horn speakers are such that the directional beam of the speaker 55 of the right channel is directed toward the assistant driver's seat, while the directional beam of the speaker 57 of the left channel is directed toward the driver's seat, and the speakers 56 and 58 employ the horn speakers having the directional beam on the horn front axis, as shown in Fig. 1.

Although not shown here the speakers 55 and 57 radiating sounds toward the opposite channel are connected with an electrical delayer and attenuator to perform a correction so that the responses from both the channels become equal to each other as with the embodiment shown in Fig. 7, whereby the acoustic effect of this embodiment is substantially the same as that of the speaker apparatus of the first embodiment. For vehicle-mounted speakers, the installing position or the mounting angle of the speakers is limited depending on the vehicle type. Thus, this embodiment is effective as means for installing the speakers accommodating for such limitation. That is, in the embodiment shown in Fig. 9, the horn mouths of the two sets of the horn speakers of both the right and left channels have been installed in a manner to be arranged properly toward the driver's seat and the assistant driver's seat, respectively. However, the directional beam can be directed toward an arbitrary direction by the length of the pipes, whereby the installing direction by the length of the pipes, whereby the installing direction of the speakers for high-frequency range can be basically made an arbitrary direction and thus the degree of freedom of speaker installation is significantly improved.

Also, in this embodiment, in order to equalize the responses from both the channels to each other, one set of speakers have been corrected by the electrical delayer and attenuator, but the effect of the delay and attenuation can be acoustically obtained by the length of the sound pipes as shown in the embodiment of Fig. 8.

As previously mentioned, if the horn speaker of the present invention is applied to vehicle-mounted use, even when the horn mouths thereof are installed in the sound radiating direction, or the horns thereof are arranged in an arbitrary direction, a speaker can be realized which have a sharp directivity such that the directional beam of the horn mouths thereof is directed toward only both the driver's seat and the assistant driver's seat.

At least one set of speakers of the one side channel are provided with sound pressure level attenuation means and electric or acoustic phase delay means by which the responses of the sounds from both the right and left channels become equal to each other at the sound-hearing points of the driver's seat or the assistant driver's seat, and speakers for intermediate/low-frequency range which are installed under the dashboard and whose radiating sound is made reflected and diffused on the floor are combined with the above-mentioned speakers for high-frequency range, thereby allowing a vehicle-mounted speaker apparatus capable of realizing a natural stereophonic sound field without being dislocated to sound-hearing points to be provided.

**Claims**

1. A horn speaker comprising:

   a horn driver (1) for generating sound waves;
   a plurality of pipes (2-7) each having first and second ends, the first ends of said plurality of pipes being coupled to said horn driver whereby to transmit therethrough sound waves generated by said horn driver; and
   a plurality of horn units (8-13) each having a mouth for radiating sound waves therefrom, the plurality of horn units being respectively coupled to the second ends of the plurality of pipes whereby to radiate from said mouths sound waves transmitted through said plurality of pipes (2-7),
   characterised in that each of said plurality of pipes (2-7) is a flexible pipe whereby said pipes are enabled to be flexed so as to arrange said plurality of horn units such that their mouths are arranged on a specific plane to constitute a single sound source having a desired directivity.

2. A horn speaker according to claim 1, in which said plurality of pipes (2-7) may be deformed so as to arrange said plurality of horn units (8-13) such that their mouths are arranged linearly on a flat plane to constitute a line sound source whereby said horn speaker has a sharp directivity.

3. A horn speaker according to claim 1, in which said plurality of pipes (2-7) may be deformed so as to arrange said plurality of horn units (8-13) such that their mouths are arranged curvedly on a curved plane.

4. A horn speaker according to claim 1, 2 or 3, in which the lengths of each of the plurality of pipes (2-7) are the same.

5. A horn speaker according to claim 1, 2 or 3, in which the lengths of the plurality of pipes (2-7) are different from one another.

6. A horn speaker according to claim 5, in which the lengths of the plurality of pipes (2-7) form a stepwise sequence.

7. A horn speaker according to any one of claims 1-6, in which each of the plurality of horn units is an exponential horn having an equivalent radius $a_M$ of a composite mouth sectional area of the horn units such that:

$$a_M \geq \frac{0.5c}{2\pi f_c} \; ;$$

where $f_c$ is a cutoff frequency of the exponential horn and $c$ is the velocity of sound.

8.  A horn speaker according to claim 1, in which said horn driver comprises a dome diaphragm (23), a drive means for driving said diaphragm, and an equalizer (20) arranged in front of said diaphragm with a narrow gap between said equalizer and said diaphragm, said equalizer being provided with a plurality of holes (27,28), and wherein said first ends of said plurality of pipes are respectively inserted into said plurality of holes of said equalizer.

9.  A vehicle-mounted speaker apparatus comprising:

    first and second pairs of horn speaker combinations each comprising first and second horn speakers according to claim 2 which are respectively installed at right and left sides of a dashboard in a vehicle compartment for radiating sound waves, each of said first and second horn speakers of said first pair of horn speaker combinations having its plurality of flexible pipes deformed to generate a sharp directivity in a direction toward a driver's seat, and each of said first and second horn speakers of said second pair of horn speaker combinations having its plurality of flexible pipes deformed to generate a sharp directivity in a direction toward an assistant driver's seat;
    delay means (43) arranged to cause sound waves radiated from said first and second horn speakers of each pair of horn speaker combinations to reach a person disposed at corresponding one of the driver's seat and assistant driver's seat simultaneously; and
    attenuation means (44) for equalizing sound pressure levels of sound waves radiated from said first and second horn speakers of each pair of horn speaker combinations.

10. A vehicle-mounted speaker apparatus according to claim 9, in which said plurality of flexible pipes are deformed so as to arrange said mouths of a part of said plurality of horn units linearly on a flat plane so as to constitute a line sound source having a sharp directivity in the direction toward said driver's seat and to arrange said mouths of the remaining part of said plurality of horn units linearly on a flat plane so as to constitute a line sound source having a sharp directivity in the direction toward said assistant driver's seat.

**Patentansprüche**

1.  Horn-Lautsprecher, welcher umfaßt:

    einen Horntreiber (1) zum Erzeugen von Schallwellen;

    eine Vielzahl von Rohren (2-7) mit jeweils ersten und zweiten Enden, wobei das erste Ende jedes der Vielzahl von Rohren mit dem Horntreiber gekoppelt ist, um dadurch durch den Horntreiber erzeugte Schallwellen zu übertragen; und

    eine Vielzahl von Horneinheiten (8-13), die jeweils eine Mündung besitzen, um davon Schallwellen abzustrahlen, welche Vielzahl von Horneinheiten jeweils mit den zweiten Enden der Vielzahl von Rohren gekoppelt ist, um dadurch von den Mündungen über die Vielzahl von Rohren (2-7) übertragene Schallwellen abzustrahlen;

    **dadurch gekennzeichnet,** daß jedes der Vielzahl von Rohren (2-7) ein flexibles Rohr ist, wodurch die Rohre befähigt werden, abgebogen zu werden, um so die Vielzahl von Horneinheiten so anzuordnen, daß ihre Mündungen in einer bestimmten Ebene liegen, um eine Einzelschallquelle mit einer gewünschten Richtwirkung zu bilden.

2.  Hornlautsprecher nach Anspruch 1, bei dem die Vielzahl von Rohren (2-7) so verformt werden kann, daß die Vielzahl von Horneinheiten (8-13) so angeordnet ist, daß ihre Mündungen linear an einer flachen Ebene angeordnet sind, um eine lineare Schallquelle zu bilden, wodurch der Hornlautsprecher eine scharfe Richtungswirkung besitzt.

3.  Hornlautsprecher nach Anspruch 1, bei dem die Vielzahl von Rohren (2-7) so verformt werden kann, daß die Vielzahl von Horneinheiten so angeordnet wird, daß ihre Mündungen an einer gekrümmten Ebene in gekrümmter Weise angeordnet sind.

4.  Hornlautsprecher nach Anspruch 1, 2 oder 3, bei dem die Längen jedes Rohres der Vielzahl von Rohren (2-7) gleich sind.

5.  Hornlautsprecher nach Anspruch 1, 2 oder 3, bei dem die Längen der Vielzahl von Rohren (2-7) voneinander verschieden sind.

6.  Hornlautsprecher nach Anspruch 5, bei dem die Längen der Vielzahl von Rohren (2-7) eine gestufte Folge bilden.

7. Hornlautsprecher nach einem der Ansprüche 1 bis 6, bei dem jede der Vielzahl von Horneinheiten ein Exponentialhorn ist mit einem Äquivalenzradius aM mit einem zusammengesetzten Mündungsabschnittsbereich der Horneinheiten in der Weise, daß:

$$a_M \geq \frac{0,5\ c}{2\ \pi\ f_c},$$

wobei $f_c$    eine Grenzfrequenz des Exponentialhorns und

c    die Schallgeschwindigkeit ist.

8. Hornlautsprecher nach Anspruch 1, bei dem der Horntreiber umfaßt eine Kuppelmembran (23), ein Antriebsmittel zum Antreiben der Membran und einen Ausgleicher (20), der vor der Membran mit engem Spalt zwischen dem Ausgleicher und der Membran angeordnet ist, welcher Ausgleicher mit einer Vielzahl von Bohrungen (27, 28) versehen ist, und wobei die ersten Enden der Vielzahl von Rohren jeweils in die Vielzahl von Bohrungen des Ausgleichers eingesetzt sind.

9. In einem Fahrzeug angebrachte Lautsprechervorrichtung, welche umfaßt:

erste und zweite Paare von Hornlautsprecher-Kombinationen, die jeweils erste und zweite Hornlautsprecher nach Anspruch 2 umfassen, welche jeweils an der rechten bzw. linken Seite eines Armaturenbretts in einem Fahrgastraum eines Fahrzeuges zum Abstrahlen von Schallwellen installiert sind, wobei bei jedem ersten bzw. zweiten Hornlautsprecher des ersten Paares der Hornlautsprecher-Kombinationen seine Vielzahl von flexiblen Rohren so verformt ist, daß eine scharfe Richtungswirkung in einer Richtung zu einem Fahrersitz erzeugt wird, und bei jedem ersten und zweiten Hornlautsprecher des zweiten Paares von Hornlautsprecher-Kombinationen seine Vielzahl von flexiblen Rohren so verformt ist, daß eine scharfe Richtungswirkung in einer Richtung zu einem Beifahrersitz hin erzeugt wird; Verzögerungsmittel (43), die so angeordnet sind, daß von dem ersten und dem zweiten Hornlautsprecher jedes Paares von Hornlautsprecher-Kombinationen abgestrahlte Schallwellen eine an einem entsprechenden Sitz, Fahrersitz oder Beifahrersitz, befindliche Person gleichzeitig erreichen; und Abschwächungsmittel (44), um die Schalldruckpegel der von dem ersten und zweiten Hornlautsprecher jedes Paares von Hornlautsprecher-Kombinationen abgestrahlten Schallwellen gleichzuhalten.

10. In einem Fahrzeug angebrachte Lautsprechervorrichtung nach Anspruch 9, bei der die Vielzahl von flexiblen Rohren so verformt ist, daß die Mündungen eines Teils der Vielzahl von Horneinheiten linear an einer flachen Ebene liegt, um so eine Linearschallquelle mit einer scharfen Richtungswirkung in Richtung zu dem Fahrersitz zu bilden, und die Mündungen des verbleibenden Teils der Vielzahl von Horneinheiten linear an einer flachen Ebene so anzuordnen, daß sie eine Linearschallquelle mit einer scharfen Richtungswirkung in Richtung zu dem Beifahrersitz bilden.

**Revendications**

1. Haut-parleur à pavillon comprenant :

  - un circuit d'attaque de pavillon (1) pour générer des ondes sonores;
  - une pluralité de conduits (2 à 7) possédant chacun des premières et secondes extrémités, les premières extrémités de ladite pluralité de conduits étant couplées audit circuit d'attaque de pavillon pour émettre ainsi des ondes sonores générées par ledit circuit d'attaque de pavillon; et
  - une pluralité d'unités de pavillon (8 à 13) possédant chacune une embouchure pour émettre des ondes sonores, la pluralité d'unités de pavillon étant respectivement couplée aux secondes extrémités de la pluralité de conduits pour émettre ainsi, à partir desdites embouchures, des ondes sonores transmises via ladite pluralité de conduits (2 à 7);

    caractérisé en ce que chacun de ladite pluralité de conduits (2 à 7) est un conduit flexible, lesdits conduits pouvant ainsi fléchir de façon à s'adapter à ladite pluralité d'unités de pavillon de telle façon que leurs embouchures soient disposées dans un plan spécifique pour constituer une seule source sonore présentant une direction désirée.

2. Haut-parleur à pavillon selon la revendication 1, dans lequel ladite pluralité de conduits (2 à 7) peut être déformée de façon à s'adapter à ladite pluralité d'unités de pavillon (8 à 13) de telle façon que leurs embouchures soient disposées, de façon linéaire, dans un plan plat pour constituer une source sonore en ligne, ledit haut-parleur à pavillon ayant ainsi une directivité précise.

3. Haut-parleur à pavillon selon la revendication 1, dans lequel ladite pluralité de conduits (2 à 7) peut être déformée de façon à s'adapter à ladite pluralité d'unités de pavillon (8 à 13) de telle façon que leurs embouchures soient disposées en courbe dans un plan incurvé.

4. Haut-parleur à pavillon selon la revendication 1, 2 ou 3, dans lequel les longueurs de chacun de la pluralité de conduits (2 à 7) sont les mêmes.

5. Haut-parleur à pavillon selon la revendication 1, 2 ou 3, dans lequel les longueurs de la pluralité de conduits (2 à 7) sont respectivement différentes.

6. Haut-parleur à pavillon selon la revendication 5, dans lequel les longueurs de la pluralité de conduits (2 à 7) forment une séquence par pas.

7. Haut-parleur à pavillon selon l'une quelconque des revendications 1 à 6, dans lequel chacune de la pluralité d'unités de pavillon est un pavillon exponentiel ayant un rayon équivalent $a_M$ d'une section composite d'embouchure des unités de pavillon tel que :

$$a_M \geq \frac{0,5c}{2\pi f_c}$$

où $f_c$ est une fréquence de coupure du pavillon exponentiel et c est la vitesse du son.

8. Haut-parleur à pavillon selon la revendication 1, dans lequel ledit circuit d'attaque de pavillon comprend un diaphragme en dôme (23), un moyen d'activation pour actionner ledit diaphragme et un égaliseur (20) placé en face dudit diaphragme avec interposition d'un petit intervalle entre ledit égaliseur et ledit diaphragme, ledit égaliseur étant muni d'une pluralité d'orifices (27, 28), et dans lequel lesdites premières extrémités de ladite pluralité de conduits sont respectivement insérées dans ladite pluralité d'orifices dudit égaliseur.

9. Dispositif de haut parleur monté dans un véhicule comprenant :

- des première et seconde paires de combinaisons de haut-parleur à pavillon comprenant chacune des premier et second haut-parleurs à pavillon, selon la revendication 2, qui sont respectivement placés sur les côtés droit et gauche d'un tableau de bord d'un habitacle de véhicule pour émettre des ondes sonores, chacun desdits premier et second haut-parleurs à pavillon de ladite première paire de combinaison de haut-parleur à pavillon possédant sa pluralité de conduits flexibles déformée pour générer une directivité précise dans une direction vers un siège de conducteur, et chacun desdits premier et second haut-parleurs de deux pavillons de ladite seconde paire de combinaisons de haut-parleur à pavillon ayant sa pluralité de conduits flexibles déformée pour générer une directivité précise en direction d'un siège de copilote;

- un moyen de temporisation (43) prévu pour que les ondes sonores émises desdits premier et second haut-parleur à pavillon de chaque paire de combinaisons de haut-parleur à pavillon atteignent une personne placée sur un siège correspondant simultanément au siège de conducteur et au siège de copilote; et

- un moyen d'atténuation (44) pour égaliser les niveaux de pression sonore des ondes sonores émises à partir desdits premier et second haut-parleurs à pavillon de chaque paire de combinaisons de haut-parleur à pavillon.

10. Dispositif de haut-parleur monté dans un véhicule selon la revendication 9, dans lequel ladite pluralité de conduits flexibles est déformée de façon à disposer lesdites embouchures d'une partie de ladite pluralité d'unité de pavillon, de façon linéaire, dams un plan plat pour constituer une source sonore en ligne ayant une directivité précise vers ledit siège de conducteur et pour disposer lesdites embouchures de la partie restante de ladite pluralité d'unités de pavillons, de façon linéaire, dans un plan plat pour constituer une source sonore en ligne ayant une directivité précise vers ledit siège de copilote.

Fig.1

Fig.2

11

Fig.3

Directivity of the first embodiment

Directivity of the third embodiment

13   12   11   10   9

8

16

19

15

18

14

17   1

Fig.4

Fig.5

Fig.6

Fig.7

Directivity of
the first set of horns

Directivity of
the second set of horns

Fig.8

Fig.9